# EUROPÄISCHE PATENTSCHRIFT

(11) **EP 4 089 852 B1**
(45) Veröffentlichungstag und Bekanntmachung des Hinweises auf die Patenterteilung: **25.10.2023**
(21) Anmeldenummer: 22401005.8
(22) Anmeldetag: 02.03.2022
(51) Int. Cl.: H01R 13/66, H01R 24/78, H02G 3/12, H02G 3/14, H01R 13/717, H01R 13/70, H01R 13/703, H02G 3/18

(54) **MODULARE STECKDOSE UND VERFAHREN ZUR AUTOMATISCHEN PARAMETRIERUNG/EINRICHTUNG**
MODULAR SOCKET AND METHOD FOR AUTOMATIC PARAMETERISATION/INSTALLATION
PRISE MODULAIRE DE COURANT ET PROCÉDÉ DE PARAMÉTRAGE / INSTALLATION AUTOMATIQUE

(30) Priorität: 03.03.2021 DE 102021105047
(43) Veröffentlichungstag der Anmeldung: 16.11.2022
(73) Patentinhaber: Albrecht Jung GmbH & Co. KG, 58579 Schalksmühle (DE)
(72) Erfinder: Biniossek, Nik, 58099 Hagen (DE); Era, Eduard, 58513 Lüdenscheid (DE); Haugk, Christian, 58579 Schalksmühle (DE)
(74) Vertreter: Fobbe, Tobias

(56) Entgegenhaltungen:
- EP-A1- 3 840 137
- EP-B1- 2 696 448
- DE-A1-102016 111 957
- DE-B3-102004 028 546
- US-A1- 2019 140 404

## Beschreibung

Die Erfindung betrifft eine modulare Steckdose zur automatischen Parametrierung oder Einrichtung derselben mit einem, in einem Aufsatz angeordneten Designrahmen mit einem Zentralstück und mit einem, in einem Einsatz angeordneten, an einem Tragring festgelegten Sockelteil, wobei am Sockelteil eine Spannungsversorgungseinheit festlegbar ist, die einerseits kontaktgebend mit dem Sockelteil in Wirkverbindung kommt und die andererseits zum elektrischen Anschluss zumindest einer elektrischen Funktionsbaugruppe im Einsatz geeignet ist, wobei die Spannungsversorgungseinheit zum Anschluss der zumindest einen elektrischen Funktionsbaugruppe zumindest eine Anschlussbuchse aufweist, in welche Anschlussbuchse ein Steckverbinder kontaktierend eingesetzt ist, wobei an das Zentralstück eine elektrische oder elektronische Funktionskomponenten aufweisende, in das Zentralstück einsetzbare Leiterplatte des Aufsatzes angrenzt, und wobei von der Leiterplatte ein zur Montage der Steckdose abspreizbarer, aus der Ebene der Leiterplatte auslenkbarer, den Steckverbinder aufweisenden Flexleiterplattenabschnitt abgeht, welcher Flexleiterplattenabschnitt mit einer Aufnahme eines sich in Richtung der Spannungsversorgungseinheit erstreckenden Aufnahmeabschnitts eines an die Leiterplatte angeschlossenen Gehäuseteils zum elektrischen Anschluss des Steckverbinders der Leiterplatte mit der Anschlussbuchse der Spannungsversorgungseinheit gefügt ist, wobei im Sockelteil eine Leiterplatte angeordnet ist, welche zur Aufnahme zumindest einer elektrischen Funktionsbaugruppe geeignet ist.

Die Erfindung betrifft ferner ein Verfahren zur automatischen Parametrierung oder Einrichtung einer solchen modularen Steckdose.

Derartige oft als elektrische Schutzkontaktsteckdosen ausgeführte Steckdosen sind im Kern dafür vorgesehen, nach Bedarf über einen entsprechend ausgebildeten Stecker und gegebenenfalls eine daran angeschlossene elektrische Leitung eine leicht wieder trennbare elektrisch leitende Verbindung zu einem Verbraucher herzustellen, so dass eine Energieversorgung des Verbrauchers, insbesondere über das Energieversorgungsnetz eines Gebäudes, möglich ist.

Aus DE 10 2021 105 047 B3 ist kürzlich eine Steckdose bekannt geworden, die eine Leiterplatte in ihrem Aufsatz aufweist, um zusätzlichen Bauraum von elektrischen Funktionsbaugruppen bereitzustellen. Zum Anschluss derselben weist die Spannungsversorgungseinheit einer solchen Steckdose zumindest eine Anschlussbuchse auf, in welche Anschlussbuchse ein Steckverbinder kontaktierend eingesetzt ist. Diese Leiterplatte weist einen Flexleiterplattenabschnitt auf, wobei dieser an die Leiterplatte flexibel, also beweglich, angeschlossen ist und zur Montage abgespreizt werden kann. Der Flexleiterplattenabschnitt ist mit einer Aufnahme eines sich in Richtung der im Einsatz angeordneten Spannungsversorgungseinheit erstreckenden Aufnahmeabschnitts eines an die Leiterplatte angeschlossenen Gehäuseteils zum elektrischen Anschluss des Steckverbinders der Leiterplatte mit der Anschlussbuchse der Spannungsversorgungseinheit des Einsatzes gefügt. Hierdurch wird eine elektrische Schnittstelle zwischen Aufsatz und Einsatz geschaffen, die es ermöglicht, unterschiedliche Funktionalitäten der Steckdose, die weit über die eigentliche Kernaufgabe der Energieversorgung eines Verbrauchers hinausgehen, im Aufsatz und insbesondere im Einsatz zu realisieren.

Hierzu existieren unterschiedliche Einsätze, die zur Realisierung der gewünschten Funktionalitäten gewisse elektrische Funktionsbaugruppen aufweisen - beispielsweise ein Relais, das im Einsatz angeordnet ist und die Steckdose schaltbar macht. Darüber hinaus existiert eine Vielzahl weiterer Funktionsbaugruppen, die in intelligenten Steckdosen zum Einsatz kommen, so dass Aufsatz und Einsatz in gewisser Weise modular miteinander koppelbar sind. Dabei ist es zur Parametrierung beziehungsweise Einrichtung einer solchen intelligenten Steckdose, beispielsweise über ein Endgerät, erforderlich, dass die Funktionalitäten, die der Einsatz aufgrund seiner Bestückung bezüglich der verbauten Funktionsbaugruppen bereitstellen kann, manuell ausgewählt werden, so dass die Parametrierung beziehungsweise Einrichtung mehrerer solcher intelligenter Steckdosen mitunter sehr zeit- und damit kostenaufwendig ist, insbesondere, da regelmäßig zu den Einsätzen kompatible Aufsätze verwendet werden müssen, so dass die Aufsätze Einsatz-spezifisch gewählt werden müssen.

Aus EP 3 840 137 A1 ist eine USB-Steckdose bekannt geworden, welche baukastenartig auf besonders kostengünstige und einfache Art und Weise bei kompakten Abmessungen mit zumindest einer zusätzlichen Funktionsbaugruppe versehen werden kann.

US 2019 140 404 A1 offenbart eine Steckdose mit einem Sockel, der ein Kommunikationssystem zum Kommunizieren mit anderen Vorrichtungen umfasst.

DE 10 2004 028 546 B3 zeigt eine eine Beleuchtungseinrichtung aufweisende Steckdose, deren Beleuchtungseinrichtung bei besonders einfacher Montage platzsparend untergebracht werden kann. Hierzu ist im Steckdosenzentralstück ein Einschubkanal vorgesehen, in den die Beleuchtungseinrichtung eingeschoben werden kann.

Ausgehend von diesem diskutierten Stand der Technik liegt der Erfindung daher die Aufgabe zugrunde, eine modulare Steckdose zu schaffen, die es erlaubt, einen Aufsatz für unterschiedliche Einsätze mit unterschiedlichen Funktionsbaugruppen bereitzustellen, wobei die Parametrierung beziehungsweise Einrichtung einer solchen Steckdose erheblich vereinfacht und die Aufsatzspezifität für unterschiedliche Einsätze aufgehoben wird.

Gelöst wird diese Aufgabe durch eine Steckdose, wobei die Leiterplatte eine Auswerteeinheit aufweist, die über den Steckverbinder an das Sockelteil angeschlossen ist, wobei die Auswerteeinheit als Auswerteergebnis erfasst, welche zu gewissen Funktionalitäten korrespondierende elektrischen Funktionsbaugruppen im Einsatz, insbesondere im Sockelteil, vorhanden sind.

Der Kerngedanke der Erfindung besteht darin, dass durch die Auswerteeinheit auf der Leiterplatte anhand der im Einsatz vorhandenen Funktionsbaugruppen erfasst wird, welche Art von Einsatz vorliegt. Anhand dieser Information ist es dann möglich, die Parametrierung oder Einrichtung der Steckdose automatisch ablaufen zu lassen. Die Erfindung bietet den großen Vorteil, dass mit einem, aus einer Auswahl unterschiedlicher Aufsätze, vorgegebenen Aufsatz sämtliche Einsatztypen modular kombiniert werden, so dass die Aufsatzspezifität für unterschiedliche Einsätze aufgehoben wird, was letztlich zu einer Kostenersparnis führt. Des Weiteren erlaubt die Erfindung, den Montageprozess der Steckdose erheblich zu vereinfachen, da eine Zuordnung der Aufsätze zu den jeweiligen Einsätzen - regelmäßig sind eine Vielzahl verpackter unterschiedlicher Auf- und Einsätze gleichzeitig im beziehungsweise am Gebäude vorhanden - nicht nur vereinfacht, sondern schlichtweg abgeschafft wird, da die Kompatibilität der Aufsätze und Einsätze durch die automatisierte Parametrierung oder Einrichtung der Steckdose sichergestellt wird, so dass ein manuelles Prüfen der Kompatibilität obsolet wird.

Gemäß einer besonders bevorzugten Ausführungsform der erfindungsgemäßen Steckdose ist auf der Leiterplatte ein Funksender, insbesondere ein Bluetooth-Sender, ein Zigbee-Sender oder ein WLAN- oder Thread-Sender, angeordnet. Ein solcher Funksender kann beispielsweise dazu verwendet werden, die Steckdose an ein mobiles Endgerät anzubinden.

In einer weiteren vorteilhaften Ausführungsform der Erfindung nimmt die Auswerteeinheit auf der Leiterplatte des Aufsatzes auf Basis des Auswerteergebnisses die Parametrierung oder Einrichtung der Steckdose vor. Dabei wird die Parametrierung oder Einrichtung der Steckdose, insbesondere bezüglich der zur Verfügung stehenden Betriebsmodi, durchgeführt, so dass die Betriebsmodi der Steckdose auf die jeweiligen im Einsatz verbauten elektrischen Funktionsbaugruppen abgestimmt werden.

Besonders vorteilhaft ist, wenn ein Funksender das Auswerteergebnis zur automatischen Parametrierung oder Einrichtung der Steckdose an ein Endgerät übermittelt. Dieses erlaubt, dass die Parametrierung oder Einrichtung anhand eines Endgerät visualisiert und bearbeitet werden kann.

Gemäß einer besonders bevorzugten Ausführungsform der erfindungsgemäßen Steckdose erzielt die Auswerteeinheit das Auswerteergebnis auf Basis einer durch die elektrischen Funktionsbaugruppen im Einsatz bedingten Spannungsmodulation. Da die Spannungsmodulation funktionsbaugruppenspezifisch ist, ist die Identifikation der elektrischen Funktionsbaugruppen im Einsatz auf zuverlässige Art und Weise möglich. Ferner kann eine derartige Spannungsmodulation einfach und kostengünstig, beispielsweise anhand von Widerständen, implementiert werden (insbesondere im Vergleich zum Kodieren der Funktionsbaugruppenspezifität anhand von einer Datenleitung/Datenschnittstelle). Die Auslesung der Spannungsmodulation erfolgt bevorzugt in einer Spannungsauswerteeinheit der Auswerteeinheit. In einer besonders kostenoptimierten Ausgestaltung der erfindungsgemäßen Steckdose bilden der Funksender und die Spannungsauswerteeinheit zusammen mit der Auswerteeinheit eine Einheit; sind also als ein Bauteil ausgestaltet.

Gemäß einer besonders bevorzugten Ausführungsform der erfindungsgemäßen Steckdose ist an das Sockelteil ein durch die Auswerteeinheit identifizierbares Relais zur Schaltung eines Stromkreises der Gebäudeinstallationstechnik angeschlossen. Dieses erlaubt es, einen Stromkreis der Gebäudeinstallationstechnik und damit einen oder mehrere an diesen Stromkreis angeschlossenen Verbraucher bedarfsgerecht zu schalten. Bevorzugt ist das Relais im Sockelteil lokalisiert, so dass eine kompakte Bauform erreicht wird. Alternativ zu der Anordnung des Relais im Sockelteil ist die Steckdose an einen Aktor angeschlossen, der das Relais umfasst. Ein derartiger, beispielsweise als Nachrüstlösung besonders attraktiver, Aktor kann ebenfalls in der Unterputzdose angeordnet sein. Als weitere Alternative zu der Anordnung des Relais im Sockelteil oder im Aktor ist die Steckdose an ein Relais im Reiheneinbaugerät in der Unterverteilung angeschlossen. Dieses erlaubt auch für flache Einbaudosen (in denen ein Relais regelmäßig bauraumtechnisch, wenn überhaupt, nur aufwendig unterzubringen ist) die Anbindung an ein Relais.

Neben der reinen (durch ein Relais realisierbaren) Schaltfunktion der Steckdose kann an das Sockelteil erfindungsgemäß auch eine durch die Auswerteeinheit identifizierbare Messeinrichtung zur Erfassung des durch einen an die Steckdose angeschlossenen Verbrauchers aufgenommenen Stromes und/oder der Spannung angeschlossen sein. Dieses erlaubt, beispielsweise über einen Funksender, Auskunft bezüglich des aufgenommenen Stromes und/oder der Spannung an ein Endgerät zu übermitteln, insbesondere die Leistungsaufnahme eines an die Steckdose angeschlossenen Verbrauchers.

In einer besonders einfachen und kostengünstigen Ausführungsform der erfindungsgemäßen Steckdose ist an das Sockelteil eine durch die Auswerteeinheit identifizierbare Spannungsversorgungseinheit angeschlossen, insbesondere ausschließlich, so dass eine besonders flache Steckdose realisierbar wird.

In einer besonders bevorzugten Ausführungsform der erfindungsgemäßen Steckdose ist die erfindungsgemäße Steckdose dazu in der Lage, die Einstecktiefe eines in die Öffnungen des Zentralstücks eingesteckten Steckerstiftes durch einen Sensor zu erfassen. Nur wenn die Auswerteeinheit der Steckdose eine zulässige detektierte Einstecktiefe eines Steckerstiftes erfasst, wird das in dieser Ausführungsform obligatorische Relais, an das die Steckdose angeschlossen ist, so geschaltet, dass die Öffnungen der beiden Anschlüsse (Neutralleiter und Außenleiter) der Steckdose spannungsführend sind. Die Auswertung basiert beispielsweise auf einem Vergleich der erfassten Einstecktiefe mit einem zulässigen Bereich der Einstecktiefe.

In einer besonders bevorzugten erfindungsgemäßen Ausgestaltung zeichnet sich die erfindungsgemäße Steckdose dadurch aus, dass sie ein als Lichtleiter ausgebildetes, einen Lichteinkoppelbereich und einen Lichtauskoppelbereich aufweisendes, in das Zentralstück integriertes Betätigungselement aufweist. Dieses Betätigungselement ist gegen eine Rückstellkraft verstellbar gelagert, wobei der Lichteinkoppelbereich zumindest einem, Licht in den Lichteinkoppelbereich einkoppelnden, Leuchtmittel zugeordnet ist und der zur manuellen Vor-Ort-Betätigung vorgesehene Lichtauskoppelbereich des Betätigungselementes eine Lichtauskoppelstruktur aufweist, wobei das Betätigungselement mit zumindest einer zum Auslösen einer gewünschten Funktion notwendigen Schalteinrichtung zusammenwirkt. Zur optimalen Einsparung von Bauraumtiefe ist der Lichteinkoppelbereich und der Lichtauskoppelbereich über einen Lichtumlenkungsbereich miteinander verbunden, wobei durch den Lichtumlenkungsbereich das Licht eine Änderung der Ausbreitungsrichtung erfährt, wobei der Lichteinkoppelbereich und der Lichtauskoppelbereich in einer Draufsicht auf das Zentralstück versetzt zueinander angeordnet sind.

Ferner betrifft die Erfindung ein Verfahren zur automatischen Parametrierung oder Einrichtung einer solchen modularen Steckdose umfassend die folgenden Schritte:
- Erfassen durch die Auswerteeinheit, an welche zu gewissen Funktionalitäten korrespondierende elektrische Funktionsbaugruppen an das Sockelteil angeschlossen sind,
- Senden dieser Information zur automatischen Parametrierung oder Einrichtung über den Funksender an ein Endgerät zur automatischen Parametrierung oder Einrichtung der Steckdose.

Durch ein solches erfindungsgemäßes Verfahren werden die selben Vorteile wie durch die vorrichtungsbezogenen Ansprüche erreicht.

Nachfolgend ist die Erfindung unter Bezugnahme auf die beigefügten Figuren anhand diverser Ausführungsbeispiele beschrieben. Es zeigen:
- **Fig. 1:**: einen Aufsatz einer erfindungsgemäßen Steckdose in einer perspektivischen Explosionsdarstellung,
- **Fig. 2:**: einen Einsatz einer erfindungsgemäßen Steckdose in einer perspektivischen Explosionsdarstellung,
- **Fig. 3:**: die gesamte erfindungsgemäße Steckdose in einer perspektivischen Explosionsdarstellung mit schematischer Andeutung der Kommunikation mit einem Endgerät und,
- **Fig. 4:**: eine Darstellung eines besonders bevorzugten Aufsatzes der erfindungsgemäßen Steckdose in einer Querschnittsdarstellung, der eine Vor-Ort-Bedienung ermöglicht.

In den verschiedenen Figuren sind gleiche Teile stets mit den gleichen Bezugszeichen versehen und werden daher in der Regel auch jeweils nur einmal benannt beziehungsweise erwähnt.

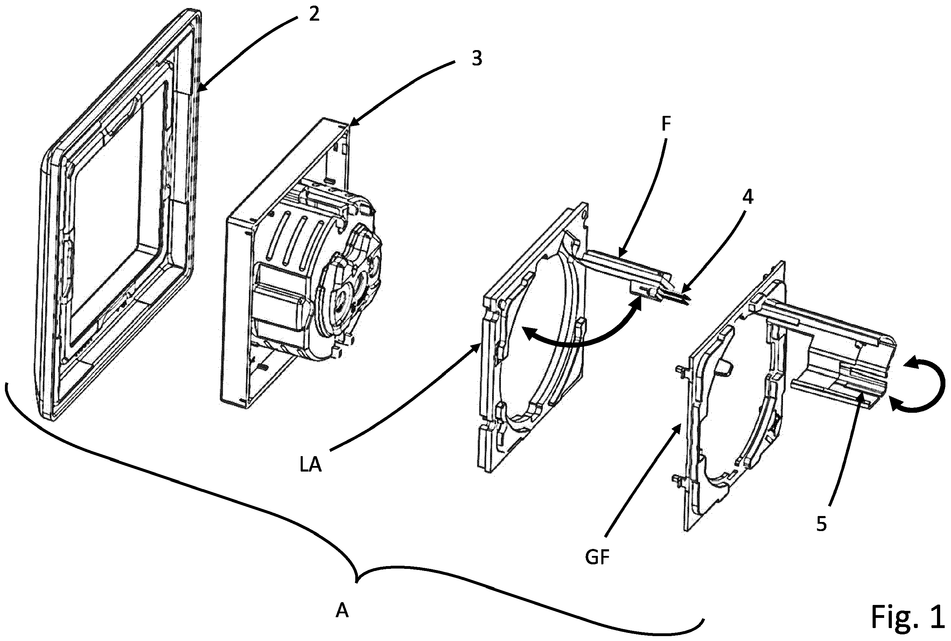

Der in Figur 1 perspektivisch in einer Explosionsdarstellung dargestellte Aufsatz Ader erfindungsgemäßen Steckdose 1 umfasst neben einem Designrahmen 2 ein Zentralstück 3, eine mehrere elektrische oder elektronische Funktionskomponenten aufweisende, in das Zentralstück 3 einsetzbare Leiterplatte LA, ein beispielsweise mittels Schnapprastung an die zugehörige Ausnehmung der Leiterplatte LA angeschlossenes Gehäuseteil GF.

Dabei geht, wie Figur 1 zeigt, ein von der Leiterplatte LA ein zur Montage der erfindungsgemäßen Steckdose 1 abspreizbarer, aus der Ebene der Leiterplatte LA auslenkbarer, einen Steckverbinder 4 aufweisender Flexleiterplattenabschnitt F ab. Dieser Flexleiterplattenabschnitt F ist mit einer Aufnahme eines sich in Richtung der Spannungsversorgungseinheit erstreckenden Aufnahmeabschnitts 5 des an die Leiterplatte LA angeschlossenen Gehäuseteils GF gefügt. Der Flexleiterplattenabschnitt F bietet den Vorteil, dass elektrische oder elektronische Funktionskomponenten ohne Bauraumverlust bezüglich der Einbautiefe an die Leiterplatte LA angeschlossen werden können. Dieses geht vorteilhafterweise mit einer besonders effektiven Ausnutzung des zur Verfügung stehenden Einbauvolumens einher.

Ebenfalls auf der Leiterplatte LA angeordnet - jedoch aufgrund der perspektivischen Rückansicht nicht erkennbar - ist eine Auswerteeinheit C, die die über den Steckverbinder 4 an den Einsatz E, insbesondere das Sockelteil 6, angeschlossen ist, um die elektrischen Funktionsbaugruppen im Einsatz E zu erfassen.

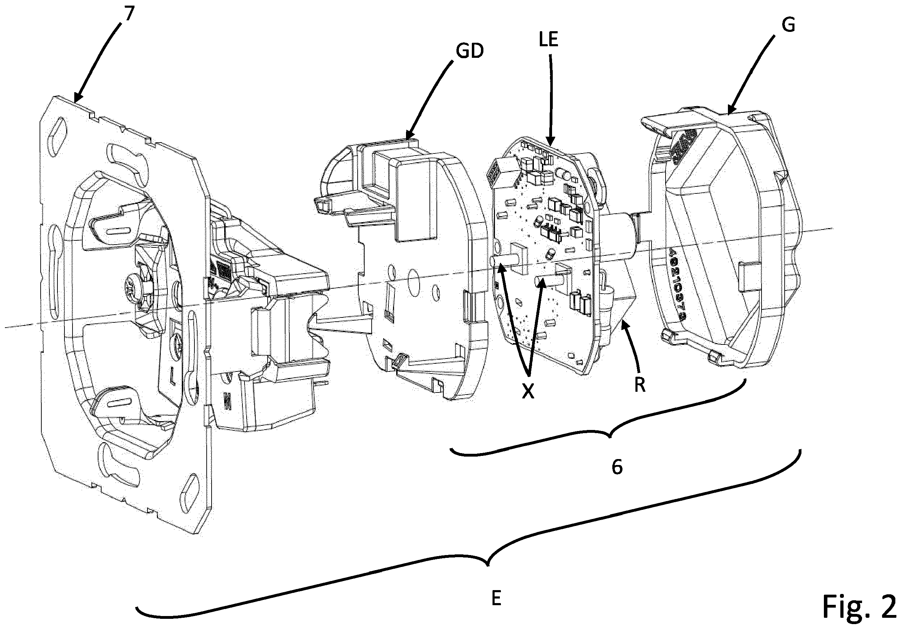

Wie in Figur 2, betreffend den Einsatz E einer erfindungsgemäßen Steckdose 1 in einer perspektivischen Explosionsdarstellung, gezeigt ist, umfasst der Einsatz E einen Tragring 7, ein Sockelteil 6 und eine im Sockelteil 6 angeordnete Leiterplatte LE, welche zur Aufnahme zumindest einer elektrischen Funktionsbaugruppe geeignet ist, beispielsweise eines Relais R, einer Messeinrichtung zur Erfassung des durch einen an die Steckdose 1 angeschlossenen Verbrauchers aufgenommenen Stromes und/oder der Spannung geeignet ist, einer Spannungsversorgungseinheit oder eines Sensors X zur Detektion der Einstecktiefe eines in die das Zentralstück 3 einzuführenden Steckerstiftes.

Konkret ist im Sockelteil 6 des Einsatzes E mindestens ein Sensor X, hier: zwei Sensoren X, untergebracht, die zur Detektion der Einstecktiefe von in die Öffnungen des Zentralstücks 3 einzusteckender Steckerstiftegeeignet sind. Dabei sind die Sensoren X auf der Leiterplatte LE im Sockelteil 6 lokalisiert, während die Leiterplatte LE in einem aus einem Gehäuseboden G und einem Gehäusedeckel GD gebildeten Gehäuse aufgenommen ist. Dabei verfügt die Steckdose 1 über eine Auswerteeinheit C, die zur Auswertung, ob die detektierte Einstecktiefe ordnungsgemäß ist, geeignet ist. Sofern die Steckdose 1 an ein schaltbares Relais R angeschlossen ist, welches Relais R in Abhängigkeit von der Detektion der Einstecktiefe beziehungsweise der entsprechenden Auswertung der Auswerteeinheit C schaltbar ist, kann die Steckdose 1 zum erhöhten Personenschutz beitragen. Wie in Figur 2 gezeigt, ist das Relais R hier beispielhaft in dem Sockelteil 6 beziehungsweise angrenzend an der Leiterplatte LE angeordnet. Die Sensoren X sind als zwei Kurzhubtaster, die durch die einzuführenden Steckerstifte mechanisch betätigt werden, ausgeführt und liefern im Zusammenspiel mit der Auswerteeinheit C eine diskrete Information darüber, ob die detektierte Einstecktiefe ordnungsgemäß ist, so dass nur im Fall der Detektion einer ordnungsgemäßen Einstecktiefe das Relais R so geschaltet wird, dass die Energieversorgung der Steckdose 1 freigegeben wird.

Dabei bildet der Steckverbinder 4 eine Schnittstelle zwischen dem Aufsatz A und dem Einsatz E, die es vorteilhafterweise ermöglicht, dass die Auswerteeinheit C als Auswerteergebnis erfasst, welche zu gewissen Funktionalitäten korrespondierende elektrischen Funktionsbaugruppen im Einsatz E, insbesondere im Sockelteil 6, vorhanden sind.

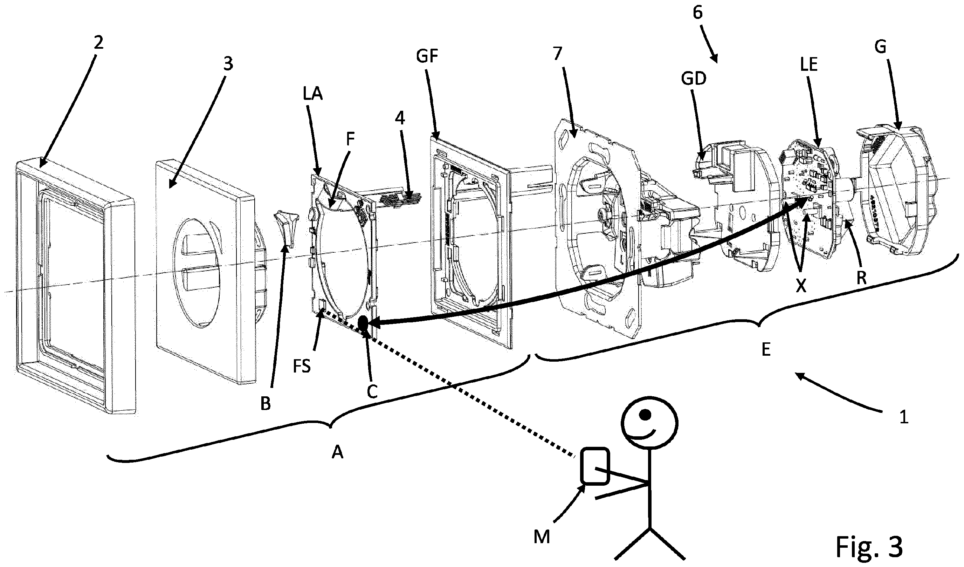

Figur 3 zeigt die die gesamte erfindungsgemäße Steckdose 1 in einer perspektivischen Explosionsdarstellung. Erkennbar ist, dass in der Zentralplatte 3 ein betätigbares, beleuchtetes Betätigungselement B zur Ermöglichung einer Vor-Ort-Bedienung angeordnet ist. Durch eine solche Vor-Ort-Bedienung kann je nach verbauten und durch die Auswerteeinheit C erfassten elektrischen Funktionsbaugruppen im Einsatz E zwischen unterschiedlichen Betriebsmodi gewählt werden. Auch kann das beleuchtete Betätigungselement B dazu genutzt werden, den jeweiligen Betriebsmodus anzuzeigen oder die aufgenommene Leistung eines an die Steckdose 1 angeschlossenen Verbrauchers zu visualisieren, beispielsweise anhand der Farbe, Intensität oder Frequenz der Beleuchtung.

Ebenfalls in Figur 3 schematisch angedeutet, ist eine Kommunikation mit einem Endgerät M, welche über einen Funksender FS realisiert wird. Eine solche Kommunikation erlaubt, dass der Funksender FS das durch die Auswerteinheit C erzielte Auswerteergebnis zur automatischen Parametrierung oder Einrichtung der Steckdose 1 an das Endgerät M übermittelt.

Hierdurch kann beispielsweise auf besonders vorteilhafte Weise erreicht werden, dass eine Software auf dem Endgerät M lediglich die Funktionalitäten ausweist, die tatsächlich in der Steckdose 1 über die zu den Funktionalitäten korrespondierenden elektrischen Funktionsbaugruppen verfügbar sind, während ansonsten bei einer nicht oder nicht ordnungsgemäßen Parametrierung oder Einrichtung der Steckdose 1 bestimmte Betriebsmodi der Steckdose 1 eingeschaltet werden sollen, die faktisch nicht durchführbar sind. Da die erfindungsgemäße Parametrierung oder Einrichtung der Steckdose 1 automatisiert auf Basis der erfassten elektrischen Funktionsbaugruppen im Einsatz E geschieht, ist das Risiko einer vergessenen oder falsch durchgeführten Parametrierung oder Einrichtung wirksam verringert. Ferner werden somit in der Software auf dem Endgerät M zum Monitoring oder Bedienen der Steckdose 1 dann nicht Funktionen ausgewiesen, die tatsächlich nicht durch die Steckdose 1 realisiert werden können.

Zusätzlich zur Parametrierung oder Einrichtung erlaubt ein solcher Funksender FS auch, Messewerte hinsichtlich Spannung, Strom oder Leistung an ein Endgerät M zu übersenden, so dass dem Anwender diesbezügliche Informationen, insbesondere die Leistungs- oder Energieaufnahme eines an die Steckdose 1 angeschlossenen Verbrauchers, zur Einsichtnahme und Verwendung zur Verfügung gestellt werden können.

Der große, die beiden Leiterplatten LA, LE verbindende, Doppelpfeil in Fig. 3 verdeutlicht, dass die Auswerteinheit C erfindungsgemäß auch dazu nutzbar sein kann, die Sensoren X bezüglich der durch sie erfassten Einstecktiefe der in die Öffnungen des Zentralstücks 3 einzuführender Steckerstifte auszulesen beziehungsweise auszuwerten und ein entsprechendes Signal an ein an die Steckdose 1 angeschlossenes Relais R, beispielsweise im Sockelteil 4, abzusetzen, so dass eine Freigabe der Energieversorgung nur dann erfolgt, wenn die Steckerstifte ordnungsgemäß eingesetzt worden sind. Hierdurch können Kosten eingespart werden, da die Auswerteeinheit C multifunktional eingesetzt wird.

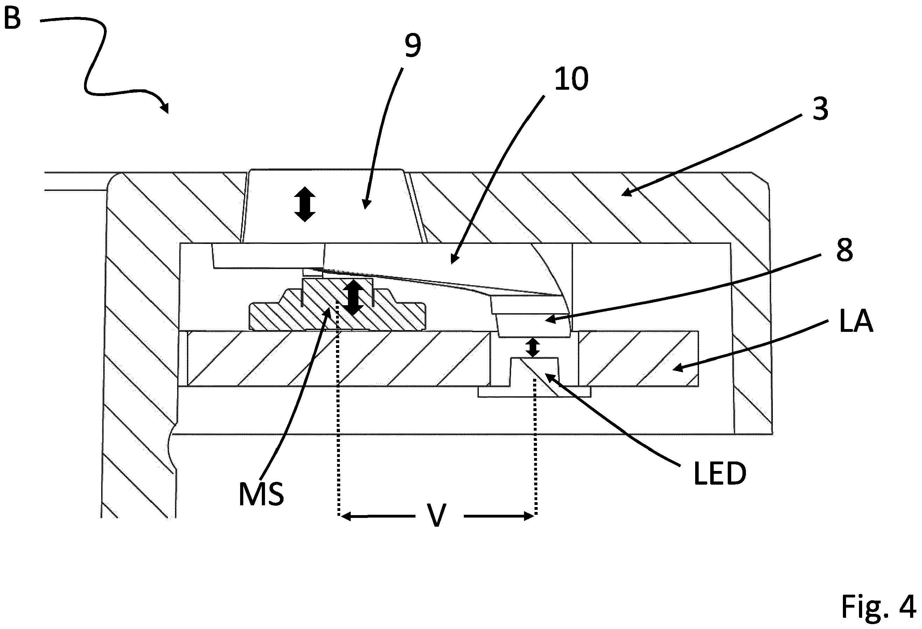

Figur 4 zeigt eine Darstellung eines besonders bevorzugten Aufsatzes A der erfindungsgemäßen Steckdose 1 in einer Querschnittsdarstellung, der eine Vor-Ort-Bedienung ermöglicht. Eine solche Vor-Ort-Bedienung, erfolgt regelmäßig, nachdem die Parametrierung oder Einrichtung der Steckdose 1 erfolgt ist, beispielsweise um zwischen unterschiedlichen Betriebsmodi zu wählen, anzuzeigen oder um die Vor-Ort-Bedienung durch entsprechende Beleuchtung zu untermalen.

Der in Figur 4 gezeigte Teil der erfindungsgemäßen Steckdose 1 umfasst ein als Lichtleiter ausgebildetes, einen Lichteinkoppelbereich 8 und einen Lichtauskoppelbereich 9 aufweisendes Betätigungselement B. Das Betätigungselement B ist in dem Zentralstück 3 angeordnet, wobei der Lichtauskoppelbereich 9 durch die Zentralstück 3 hindurchgreift. Dabei ist das Betätigungselement B gegen eine Rückstellkraft verstellbar gelagert, so dass ein Drücken des Betätigungselementes B mit einem Absenken des Betätigungselementes B einhergeht. Nach erfolgter Betätigung kehrt das Betätigungselement B wieder zurück in seine Ausgangsstellung. Bei der Betätigung wirkt das Betätigungselement B mit zumindest einer zum Auslösen einer gewünschten Funktion notwendigen Schalteinrichtung MS zusammen. Ein solches Zusammenwirken besteht regelmäßig in dem durch das Betätigen bedingte Absenken des Betätigungselementes B bis das Betätigungselement B, vorzugsweise mit der Rückseite des Lichtauskoppelbereiches 9, die Schalteinrichtung MS kontaktiert. Dabei ist der Lichteinkoppelbereich 8 zumindest einer, Licht in den Lichteinkoppelbereich 8 einkoppelnden, Beleuchtungseinrichtung LED zugeordnet. Eine solches Beleuchtungseinrichtung LED ist vorzugsweise an die Leiterplatte LA angeschlossen und über diese mit Strom versorgt. Dabei ist zwischen der Oberkante der Beleuchtungseinrichtung LED und der Unterkante des Lichteinkoppelbereiches 8 regelmäßig ein Spalt vorgesehen. Dieser bietet im Falle der Betätigung des Betätigungselementes B einen hinreichenden Verschiebeweg, damit das Betätigungselement B sich Absenken kann, ohne mit der Beleuchtungseinrichtung LED zu kollidieren (gem. den schematischen fett gezeichneten Pfeilen in Figur 1). Dabei ist der Verschiebeweg gleich lang oder länger gewählt als die Distanz, die die Schalteinrichtung MS komprimiert wird. Das in den Lichteinkoppelbereich 8 eingekoppelte Licht wird dann über einen den Lichteinkoppelbereich 8 und den Lichtauskoppelbereich 9 verbindenden Lichtumlenkungsbereich 10 umgelenkt, so dass eine Lichtauskopplung an dem Lichtauskoppelbereich 9 erfolgt. Nach der Einkopplung erfährt das Licht durch den Lichtumlenkungsbereich 10 eine Änderung der Ausbreitungsrichtung. Die Anordnung des Lichteinkoppelbereiches 8 und des Lichtauskoppelbereiches 9 ist der Gestalt, dass in einer Draufsicht auf die Zentralplatte Z der Lichteinkoppelbereich 8 und der Lichtauskoppelbereich 9 versetzt zueinander angeordnet sind. Durch den Umlenkungsbereich wird der Versatz V des Lichteinkoppelbereichs 8 und des Lichtauskoppelbereiches 9 durch eine Änderung der Ausbreitungsrichtung des Lichtes überbrückt. Durch diese Ausgestaltung des Aufsatzes A wird neben der angestrebten Vor-Ort-Bedienung auch eine besonders geringere Einbautiefe ermöglicht.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- 1: Steckdose
- 2: Designrahmen
- 3: Zentralstück
- 4: Steckverbinder
- 5: Aufnahmeabschnitt
- 6: Sockelteil
- 7: Tragring
- 8: Lichteinkoppelbereich
- 9: Lichtauskoppelbereich
- 10: Lichtum lenkungsbereich

- A: Aufsatz
- B: Betätigungselement
- C: Auswerteeinheit
- E: Einsatz
- F: Flexleiterplattenabschnitt
- FS: Funksender
- G: Gehäuseboden
- GD: Gehäusedeckel
- GF: Gehäuseteil
- LA: Leiterplatte
- LE: Leiterplatte
- LED: Beleuchtungseinrichtung
- M: Endgerät
- MS: Schalteinrichtung
- R: Relais
- ST: Steckerstifte
- V: Versatz
- X: Sensor

## Patentansprüche

1. Modulare Steckdose zur automatischen Parametrierung oder Einrichtung derselben mit einem, in einem Aufsatz (A) angeordneten Designrahmen (2) mit einem Zentralstück (3) und mit einem, in einem Einsatz (E) angeordneten, an einem Tragring (7) festgelegten Sockelteil (6), wobei am Sockelteil (6) eine Spannungsversorgungseinheit festlegbar ist, die einerseits kontaktgebend mit dem Sockelteil (6) in Wirkverbindung kommt und die andererseits zum elektrischen Anschluss zumindest einer elektrischen Funktionsbaugruppe im Einsatz (E) geeignet ist, wobei die Spannungsversorgungseinheit zum Anschluss der zumindest einen elektrischen Funktionsbaugruppe zumindest eine Anschlussbuchse aufweist, in welche Anschlussbuchse ein Steckverbinder (4) kontaktierend eingesetzt ist, wobei an das Zentralstück (3) eine elektrische oder elektronische Funktionskomponenten aufweisende in das Zentralstück (3) einsatzbare Leiterplatte (LA) des Aufsatzes (A) angrenzt, und wobei von der Leiterplatte (LA) des Aufsatzes ein zur Montage der Steckdose (1) abspreizbarer, aus der Ebene der Leiterplatte (LA) des Aufsatzes auslenkbarer, den Steckverbinder (4) aufweisenden Flexleiterplattenabschnitt (F) abgeht, welcher Flexleiterplattenabschnitt (F) mit einer Aufnahme eines sich in Richtung der Spannungsversorgungseinheit erstreckenden Aufnahmeabschnitts (5) eines an die Leiterplatte (LA) des Aufsatzes angeschlossenen Gehäuseteils (GF) zum elektrischen Anschluss des Steckverbinders (4) der Leiterplatte (LA) des Aufsatzes mit der Anschlussbuchse der Spannungsversorgungseinheit gefügt ist, wobei im Sockelteil (6) eine Leiterplatte (LE) des Einsatzes angeordnet ist, welche zur Aufnahme zumindest einer elektrischen Funktionsbaugruppe geeignet ist, **dadurch gekennzeichnet, dass** die Leiterplatte (LA) des Aufsatzes eine Auswerteeinheit (C) aufweist, die über den Steckverbinder (4) an das Sockelteil (6) angeschlossen ist, wobei die Auswerteeinheit (C) als Auswerteergebnis erfasst, welche zu gewissen Funktionalitäten korrespondierende elektrischen Funktionsbaugruppen im Einsatz (E), insbesondere im Sockelteil (6), vorhanden sind.

2. Modulare Steckdose nach Anspruch 1, **dadurch gekennzeichnet, dass** auf der Leiterplatte (LA) des Aufsatzes ein Funksender (FS), insbesondere ein Bluetooth-Sender, ein Zigbee-Sender oder ein WLAN- oder Thread-Sender, angeordnet ist.

3. Modulare Steckdose nach Anspruch 1 oder 2, **dadurch gekennzeichnet, dass** die Auswerteeinheit (C) auf der Leiterplatte (LA) des Aufsatzes die Parametrierung oder Einrichtung der Steckdose (1), insbesondere bezüglich der zur Verfügung stehenden Betriebsmodi, auf Basis des Auswerteergebnisses vornimmt.

4. Modulare Steckdose nach einem der Ansprüche 2 oder 3 in seinem Rückbezug auf Anspruch 2, **dadurch gekennzeichnet, dass** der Funksender (FS) das Auswerteergebnis zur automatischen Parametrierung oder Einrichtung der Steckdose (1) an ein Endgerät (M) übermittelt.

5. Modulare Steckdose einem der Ansprüche 1 bis 4, **dadurch gekennzeichnet, dass** die Auswerteeinheit (C) das Auswerteergebnis auf Basis einer durch die elektrischen Funktionsbaugruppen im Einsatz (E) bedingten Spannungsmodulation erzielt, die funktionsbaugruppenspezifisch ist.

6. Modulare Steckdose einem der Ansprüche 1 bis 4, **dadurch gekennzeichnet, dass** an das Sockelteil (6) ein durch die Auswerteeinheit (C) dentifizierbares Relais (R) zur Schaltung eines Stromkreises einer Gebäudeinstallationstechnik angeschlossen ist.

7. Modulare Steckdose nach Anspruch 6, **dadurch gekennzeichnet, dass** das Relais (R) in dem Sockelteil (6) angeordnet ist.

8. Modulare Steckdose nach Anspruch 6, **dadurch gekennzeichnet, dass** die Steckdose (1) an einen Aktor angeschlossen ist, der das Relais (R) umfasst.

9. Modulare Steckdose nach Anspruch 5, **dadurch gekennzeichnet, dass** die Steckdose (1) an ein Relais (R) im Reiheneinbaugerät in einer Unterverteilung angeschlossen ist.

10. Modulare Steckdose nach einem der Ansprüche 1 bis 8, **dadurch gekennzeichnet, dass** an das Sockelteil (6) eine durch die Auswerteeinheit (C) identifizierbare Messeinrichtung zur Erfassung des durch einen an die Steckdose (1) angeschlossenen Verbrauchers aufgenommenen Stromes und/oder der Spannung angeschlossen ist.

11. Modulare Steckdose nach einem der Ansprüche 1 bis 10, **dadurch gekennzeichnet, dass** an das Sockelteil (6) eine durch die Auswerteeinheit (C) identifizierbare Spannungsversorgungseinheit angeschlossen ist.

12. Modulare Steckdose nach einem der Ansprüche 1 bis 5, **dadurch gekennzeichnet, dass** an das Sockelteil (6) ausschließlich eine durch die Auswerteeinheit (C) identifizierbare Spannungsversorgungseinheit als elektrische Funktionsbaugruppe im Einsatz (E) angeschlossen ist.

13. Modulare Steckdose nach einem der Ansprüche 1 bis 12, **dadurch gekennzeichnet, dass** an das Sockelteil (6) ein durch die Auswerteeinheit (C) identifizierbarer Sensor (X) zur Detektion einer Einstecktiefe eines in eine Zentralplatte einzuführenden Steckerstiftes umfasst, wobei dieser Sensor (X) auf der Leiterplatte (LE) des Einsatzes (E) angeordnet ist.

14. Modulare Steckdose nach einem der Ansprüche 1 bis 13, **dadurch gekennzeichnet, dass** die Steckdose (1) ein als Lichtleiter ausgebildetes, einen Lichteinkoppelbereich (8) und einen Lichtauskoppelbereich (9) aufweisendes in das Zentralstück (3) integriertes Betätigungselement (B) aufweist, welches Betätigungselement (B) gegen eine Rückstellkraft verstellbar gelagert ist, wobei der Lichteinkoppelbereich (8) zumindest einem, Licht in den Lichteinkoppelbereich (8) einkoppelnden, Leuchtmittel (LED) zugeordnet ist und zur manuellen Vor-Ort-Betätigung vorgesehene Lichtauskoppelbereich (9) des Betätigungselementes (B) eine Lichtauskoppelstruktur aufweist, wobei das Betätigungselement mit zumindest einer zum Auslösen einer gewünschten Funktionen notwendigen Schalteinrichtung (MS) zusammenwirkt, wobei der Lichteinkoppelbereich (8) und der Lichtauskoppelbereich (9) über einen Lichtumlenkungsbereich (10) miteinander verbunden sind, durch welchen Lichtumlenkungsbereich (10) das Licht eine Änderung der Ausbreitungsrichtung erfährt, wobei der Lichteinkoppelbereich (8) und der Lichtauskoppelbereich (9) in einer Draufsicht auf das Zentralstück (3) versetzt zueinander angeordnet sind.

15. Verfahren zur automatischen Parametrierung oder Einrichtung einer modularen Steckdose nach einem der Ansprüche 1 bis 14 umfassend die folgenden Schritte:
- Erfassen durch die Auswerteeinheit (C) welche zu gewissen Funktionalitäten korrespondierende elektrischen Funktionsbaugruppen an das Sockelteil (6) angeschlossen sind,
- Senden dieser Information zur automatischen Parametrierung oder Einrichtung über einen Funksender (FS) an ein Endgerät (M) zur automatischen Parametrierung oder Einrichtung der Steckdose (1).

## Claims

1. Modular socket for automatic parameterisation or setting up of the same, having a design frame (2) with a central piece (3) arranged in a surface-mounted assembly (A), and having a base part (6) which is arranged in a flush-mounted assembly (E) and is fixed on a supporting ring (7), wherein a voltage supply unit can be fixed to the base part (6) which, on the one hand, comes into operative contact-making connection with the base part (6) and, on the other hand, is suitable for the electrical connection of at least one electrical functional module in the flush-mounted assembly (E), wherein the voltage supply unit has at least one connection socket for connection of the at least one electrical function module, into which connection socket a plug connector (4) is inserted in a contacting manner, wherein a printed circuit board (LA) of the surface-mounted assembly (A) having electrical or electronic function components and being suitable to be inserted into the central part (3) adjoins the central part (3), and wherein a flexible printed circuit board section (F), which can be spread apart for mounting the socket (1) and deflected out of the plane of the printed circuit board (LA) of the surface-mounted assembly, providing a plug connector (4), extends from the printed circuit board (LA) of the surface-mounted assembly, which flexible printed circuit board section (F), for electrical connection of the plug connector (4) of the printed circuit board (LA) of the surface-mounted assembly, is joined with the connection socket of the power supply unit by means of a receptacle of a receiving section (5) of a housing part (GF) connected to the printed circuit board (LA) of the surface-mounted assembly stretching out into the direction of the voltage supply unit, wherein a printed circuit board (LE) of the flush-mounted assembly is arranged in the base part (6), which is suitable to take up at least one electrical function module, **characterized by the fact that** the printed circuit board (LA) of the surface-mounted assembly has an evaluation unit (C) being connected to the base part (6) by means of the plug connector (4), wherein the evaluation unit (C) detects as evaluation result which electrical function modules corresponding to certain functions can be found in the flush-mounted assembly (E), particularly in the base part (6).

2. Modular socket in accordance with Claim 1, **characterized by the fact that** a radio transmitter (FS), in particular a Bluetooth transmitter, a Zigbee transmitter or a WLAN or thread transmitter is arranged on the printed circuit board (LA) of the surface-mounted assembly.

3. Modular socket in accordance with Claim 1 or 2, **characterized by the fact that** the evaluation unit (C) on the printed circuit board (LA) of the surface-mounted assembly carries out the parameterization or set-up of the socket (1), in particular with regard to the available operating modes, based on the evaluation result.

4. Modular socket in accordance with any of Claims 2 or 3 in its reference back to Claim 2, **characterized by the fact that** the radio transmitter (FS) transmits the evaluation result to a terminal (M) for automatic parameterization or set-up of the socket (1).

5. Modular socket in accordance with any of Claims 1 to 4, **characterized by the fact that** the evaluation unit (C) obtains the evaluation result on the basis of a function module-specific voltage modulation caused by the electrical function modules in the flush-mounted assembly (E).

6. Modular socket in accordance with any of Claims 1 to 4, **characterized by the fact that** a relay (R) which can be identified by the evaluation unit (C) is connected to the base part (6) for switching a circuit of a building installation technology.

7. Modular socket in accordance with Claim 6, **characterized by the fact that** the relay (R) is arranged in the base part (6).

8. Modular socket in accordance with Claim 6, **characterized by the fact that** the socket (1) is connected to an actuator comprising the relay (R).

9. Modular socket in accordance with Claim 5, **characterized by the fact that** the socket (1) is connected to a relay (R) in the series installation device in a sub-distribution.

10. Modular socket in accordance with any of Claims 1 to 8, **characterized by the fact that** a measuring device, identifiable by the evaluation unit (C), is connected to the base part (6) for detecting the current and/or voltage drawn by a consumer connected to the socket outlet.

11. Modular socket in accordance with any of Claims 1 to 10, **characterized by the fact that** a voltage supply unit identifiable by the evaluation unit (C) is connected to the base part (6).

12. Modular socket in accordance with any of Claims 1 to 5, **characterized by the fact that** exclusively a voltage supply unit identificable by the evaluation unit (C) is connected to the base part (6) as an electrical function module in the flush-mounted assembly (E).

13. Modular socket in accordance with any of Claims 1 to 12, **characterized by the fact that** the base part (6) comprises a sensor (X), identifiable by the evaluation unit (C), for detecting an insertion depth of a plug pin to be inserted into the central plate, this sensor (X) being arranged on the printed circuit board (LE) of the flush-mounted assembly (E).

14. Modular socket in accordance with any of Claims 1 to 13, **characterized by the fact that** the socket (1) provides an operating element (B) designed as fibre optic cable, having a light coupling area (8) and a light decoupling area (9), integrated into the central unit (3), which operating element (B) is adjustably mounted against a restoring force, wherein the light coupling area (8) is assiged to at least one luminaire (LED) coupling light into the light coupling area (8) and the light decoupling area (9) of the operating element (B) provided for manual on-site-operation provides a light decoupling structure, wherein the operating element interacts with at least one switching unit (MS) necessary to release one of the requested functions, wherein the light coupling area (8) and the light decoupling area (9) are connected via a light deflection area (10), by which light deflection area (10) the propagation direction of the light is changed, wherein the light coupling area (8) and the light decoupling area (9), in a top view of the central piece (3), are offset to one another.

15. Method for automatic parameterisation or setting up of a modular socket in accordance with any of Claims 1 to 14, comprising the following steps:
- Detecting by the evaluation unit (C) which electrical function modules corresponding to certain functions are connected to the base part (6),
- Sending this information for automatic parameterisation or setting up via a radio transmitter (FS) to a terminal (M) for automatic parameterisation or setting up of the socket (1).

## Revendications

1. Prise de courant modulaire pour le paramétrage automatique ou l'installation de celle-ci avec un cadre de design (2) avec une pièce centrale (3) disposé dans une unité supérieure (A) et avec une partie de socle (6) disposée dans une partie inféreure (E) et fixée sur un anneau porteur (7), une unité d'alimentation en tension pouvant être fixée sur la partie de socle (6), laquelle vient d'une part en liaison active avec la partie de socle (6) en établissant un contact et qui est d'autre part appropriée pour le raccordement électrique d'au moins un module fonctionnel électrique dans la partie inférieure (E), l'unité d'alimentation en tension présentant au moins une douille de raccordement pour le raccordement de l'au moins un module fonctionnel électrique, douille de raccordement dans laquelle un connecteur à fiches (4) est inséré en établissant un contact, une carte de circuit imprimé (LA) de la partie supérieure (A), présentant des composants fonctionnels électriques ou électroniques et pouvant être insérée dans la pièce centrale (3), étant adjacente à la pièce centrale (3), et une section de circuit imprimé flexible (F) pouvant être écartée pour le montage de la prise (1), pouvant être déviée du plan de la carte de circuit imprimé (LA) de la partie supérieure et présentant le connecteur (4), partant de la carte de circuit imprimé (LA) de la partie supérieure, la partie de circuit imprimé flexible (F) étant jointe, pour le raccordement électrique du connecteur (4) de la carte de circuit imprimé (LA) de la partie supérieure avec la douille de raccordement de l'unité d'alimentation en tension, à un logement d'une partie de réception (5) s'étendant dans la direction de l'unité d'alimentation en tension, la partie de réception appartenant à une partie de boîtier (GF) raccordée à la carte de circuit imprimé (LA) de la partie supérieure, une carte de circuit imprimé (LE) de la partie inférieure étant disposée dans la partie de socle (6) et étant appropriée pour recevoir au moins un module fonctionnel électrique, **caractérisé en ce que** la carte de circuit imprimé (LA) de la partie supérieure présente une unité d'évaluation (C) qui est raccordée à la partie de socle (6) par le connecteur (4), l'unité d'évaluation (C) détectant comme résultat d'évaluation quels modules fonctionnels électriques correspondant à certaines fonctionnalités sont présents dans la partie inférieure (E), en particulier dans la partie de socle (6).

2. Prise de courant modulaire selon la revendication 1, **caractérisé en ce que** sur la carte de circuit imprimé (LA) de la partie supérieure est disposé un émetteur radio (FS), particulièrement un émetteur Bluetooth, un émetteur Zigbee ou un émetteur WLAN ou de fils.

3. Prise de courant modulaire selon la revendication 1 ou 2, **caractérisé en ce que** l'unité d'évaluation (C) sur la carte de circuit imprimé (LA) de la partie supérieure effectue le paramétrage ou l'installation de la prise de courant (1), notamment en ce qui concerne les modes de fonctionnement disponibles, sur la base du résultat d'évaluation.

4. Prise de courant modulaire selon l'une quelconque des revendications 2 ou 3 dans son rappel de la revendication 2, **caractérisée en ce que** l'émetteur radio (FS) transmet le résultat d'évaluation à un terminal (M) pour le paramétrage ou l'installation automatique de la prise (1).

5. Prise de courant modulaire selon l'une quelconque des revendications 1 à 4, **caractérisé en ce que** que l'unité d'évaluation (C) obtient le résultat d'évaluation sur la base d'une modulation de tension conditionnée par les modules fonctionnels électriques dans la partie inférieure (E), cette modulation de tention étant spécifique aux modules fonctionnels.

6. Prise de courant modulaire selon l'une quelconque des revendications 1 à 4, **caractérisé en ce qu'**un relais (R) identifiable par l'unité d'évaluation (C) est raccordé à la partie de socle (6) pour la commutation d'un circuit électrique d'une technique d'installation de bâtiment.

7. Prise de courant modulaire selon la revendication 6, **caractérisé en ce que** le relais (R) est disposé dans la partie de socle (6).

8. Prise de courant modulaire selon la revendication 6, **caractérisé en ce que** la prise de courant (1) est raccordée à un actionneur qui comprend le relais (R).

9. Prise de courant modulaire selon la revendication 5, **caractérisé en ce que** la prise de courant (1) est raccordée à un relais (R) dans l'appareil encastré en série dans une distribution secondaire.

10. Prise de courant modulaire selon l'une quelconque des revendications 1 à 8, **caractérisé en ce qu'**un dispositif de mesure identifiable par l'unité d'évaluation (C) est raccordé à la partie de socle (6) pour la saisie du courant et/ou de la tension absorbés par un consommateur raccordé à la prise de courant (1).

11. Prise de courant modulaire selon l'une quelconque des revendications 1 à 10, **caractérisé en ce qu'**une unité d'alimentation en tension identifiable par l'unité d'évaluation (C) est raccordée à la partie de socle (6).

12. Prise de courant modulaire selon l'une quelconque des revendications 1 à 5, **caractérisé en ce qu'**une unité d'alimentation en tension identifiable par l'unité d'évaluation (C) est exclusivement raccordée à la partie de socle (6) en tant que module fonctionnel électrique dans la partie inférieure (E).

13. Prise de courant modulaire selon l'une quelconque des revendications 1 à 12, **caractérisé en ce que** la partie de socle (6) comprend un capteur (X) identifiable par l'unité d'évaluation (C) pour la détection d'une profondeur d'enfichage d'une broche de connecteur à introduire dans une plaque centrale, ce capteur (X) étant disposé sur la carte imprimée (LE) de la partie inférieure (E).

14. Prise de courant modulaire selon l'une quelconque des revendications 1 à 13, **caractérisé en ce que** la prise (1) présente un élément d'actionnement (B) intégré dans la pièce centrale (3), réalisé sous forme de guide de lumière et présentant une zone d'entrée de lumière (8) et une zone de sortie de lumière (9), lequel élément d'actionnement (B) est logé de manière réglable contre une force de rappel, la zone de couplage de lumière (8) étant associée à au moins un moyen d'éclairage (LED) couplant la lumière dans la zone de couplage de lumière (8) et la zone de découplage de lumière (9) de l'élément d'actionnement (B) prévue pour l'actionnement manuel sur place présentant une structure de découplage de lumière, l'élément d'actionnement coopérant avec au moins un dispositif de commutation (MS) nécessaire pour déclencher une fonction souhaitée, la zone de couplage de lumière (8) et la zone de découplage de lumière (9) étant reliées entre elles par une zone de déviation de lumière (10), zone de déviation de lumière (10) par laquelle la lumière subit une modification de la direction de propagation, la zone de couplage de lumière (8) et la zone de découplage de lumière (9) étant disposées de manière décalée l'une par rapport à l'autre dans une vue de dessus de la pièce centrale (3).

15. Procédé de paramétrage ou d'installation automatique d'une prise modulaire selon l'une quelconque des revendications 1 à 14, comprenant les étapes suivantes :
- détection, par l'unité d'évaluation (C), quels modules fonctionnels électriques correspondant à certaines fonctionnalités sont raccordés à la partie de socle (6),
- envoi de cette information de paramétrage ou d'installation automatique par un émetteur radio (FS) à un terminal (M) pour le paramétrage ou l'installation automatique de la prise (1).
